# EUROPEAN PATENT APPLICATION

(11) **EP 4 691 223 A1**
(43) Date of publication of application: **11.02.2026**
(21) Application number: 24795472.0
(22) Date of filing: 23.01.2024
(51) Int. Cl.: A01G 18/00

(54) **WATER CONTROL METHOD IN STROPHARIA RUGOSOANNULATA CULTIVATION PROCESS**

(30) Priority: 28.04.2023 CN 202310487198
(71) Applicant: Changzhou Yuanzhida Business Co., Ltd., Xinbei District Changzhou, Jiangsu 213002 (CN)
(72) Inventor: WAN, Yongyi, hangzhou, Jiangsu 213002 (CN); PEI, Zhimin, hangzhou, Jiangsu 213002 (CN)
(74) Representative: Lorenz & Kollegen
(86) International application number: PCT/CN2024/073654
(87) International publication number: WO 2024/222083

(57) **Abstract**

The present invention belongs to the technical field of large-scale fungus cultivation, and specifically relates to a water control method in a cultivation process for Stropharia rugosoannulata. In the water control method in the cultivation process for Stropharia rugosoannulata provided by the present invention, a cultivation method comprises field planting, shelf-type cultivation or potted cultivation. When the cultivation method is field planting, the bottom surface of a culture medium is higher than the lowest position of an aisle by greater than or equal to 1 cm, so that accumulated water at the bottom of the culture medium can be discharged. When the cultivation method is shelf-type cultivation or pot-ted cultivation, the number and diameter of bottom holes of the shelf or the pot are controlled such that the water-dripping time after a single watering is less than or equal to 3h, and accumulated water in the culture medium can be effectively prevented. The cultivation process of the present invention also comprises a step of stimulating fruiting of the Stropharia rugosoannulata, so that nutrients in the culture medium are fully used, a fruiting period is prolonged, and yield is increased.

## Description

The present application claims priority to the Chinese Patent Application CN202310487198.X filed to the China National Intellectual Property Administration (CNIPA) on April 28, 2023 and entitled "METHOD FOR MOISTURE CONTROL DURING CULTIVATION OF *STROPHARIA RUGOSOANNULATA",* which is incorporated herein by reference in its entirety.

### TECHNICAL FIELD

The present disclosure belongs to the technical field of cultivation of macrofungi, and specifically relates to a method for moisture control during cultivation of *Stropharia rugosoannulata.*

### BACKGROUND

*Stropharia rugosoannulata (S. rugosoannulata),* also known as Wine Cap *Stropharia,* wrinkled *Stropharia,* burgundy mushroom, Ferdinand's mushroom, or *Psilocybe ferdinandii,* is classified under the genus *Stropharia,* family *Strophariaceae,* order *Agaricales,* class *Agaricomycetes,* and phylum *Basidiomycota. S. rugosoannulata* has a medium to large fruiting body. The cap of *S. rugosoannulata* has a hemispherical to flattened shape and a brown to gray-brown or rust-brown color, is smooth or adorned with fibrillose scales, and is glossy when dry. The cap margin of *S. rugosoannulata* is initially incurved and may bear remnants of the veil.

Like other fungi, *S. rugosoannulata* exhibits a stringent moisture requirement during growth. The moisture content significantly impacts the growth of both hyphae and fruiting bodies of *S. rugosoannulata.* When *S. rugosoannulata* is cultivated, a moisture content of 35% to 75% is required for the cultivation substrate. A too-high moisture content will make the cultivation substrate darkened and the hyphae thin and weak, and may even cause the shrinkage of the existing hyphae.

However, during the cultivation of *S. rugosoannulata,* the *S. rugosoannulata* spawn is prone to waterlogging damage due to excessive moisture at the bottom. For example, during forest planting, water may accumulate at bottoms of cultivation substrates in some areas due to uneven terrains, resulting in mycelial mildew, foul odors, and impaired growth. During greenhouse cultivation, the mycelial growth is negatively affected by high water levels and muddy walkways, which reduces the yield. In the shelving system, the bottom of the substrate is wrapped with a film, on which drainage holes are formed. However, after the drainage is slowed, hyphae are at an excessive humidity for a long time, which adversely affects the growth and yield. Therefore, addressing the excessive moisture or localized water accumulation at the bottom of the cultivation substrate for *S. rugosoannulata* is crucial for guaranteeing the yield of *S. rugosoannulata.*

### SUMMARY

In view of this, an objective of the present disclosure is to provide a method for moisture control during cultivation of *Stropharia rugosoannulata.* This method may effectively prevent the excessive moisture or localized water accumulation at the bottom of the cultivation substrate for *S. rugosoannulata* to ensure the yield of *S. rugosoannulata.*

The present disclosure provides a method for moisture control during cultivation of *S*. *rugosoannulata,* where the cultivation includes in-ground cultivation, shelf-based cultivation, or pot-based cultivation;
when the cultivation is the in-ground cultivation, the method for moisture control includes the following steps:
ridging, and arranging a walkway between adjacent ridges;
laying a cultivation substrate on each of the ridges; and
setting a bottom surface of the cultivation substrate to be 0.3 cm or more higher than the lowest point of the walkway;
when the cultivation is the shelf-based cultivation or the pot-based cultivation, the method for moisture control includes the following steps:
   laying the cultivation substrate on a shelf or in a pot; and
   forming holes at a bottom of the shelf or the pot, where a number and a size of the holes are designed such that a duration of water dripping from the holes after single watering is less than or equal to 3 h; and
   the cultivation further includes stimulating fruiting of the *S. rugosoannulata.*

In some embodiments, the bottom surface of the cultivation substrate is set to be 1 cm or more higher than the lowest point of the walkway.

In some embodiments, the number and the size of the holes are designed such that a duration of continuous water dripping from the holes after single watering is less than or equal to 2 h.

In some embodiments, the cultivation substrate includes a cultivation medium and a water-retention layer sequentially from bottom to top; and when a soil used for the in-ground cultivation is not a sandy soil, a soil layer is additionally laid beneath the cultivation substrate.

In some embodiments, the cultivation medium includes lignin; and at least one raw material for the cultivation medium has a lignin content of higher than or equal to 10%.

In some embodiments, the shelf is not provided with an enclosure or is provided with an enclosure having a perforated bottom or is provided with an enclosure allowing dynamically-adjustable drainage.

In some embodiments, atomization spray irrigation is applied to stimulate the fruiting of the *S. rugosoannulata;* a spray irrigation system adopted accordingly includes an atomizing nozzle; a distance between the atomizing nozzle and a surface of the cultivation substrate is more than or equal to 5 cm; a water outlet pressure of the atomizing nozzle is more than or equal to 0.06 MPa; and a duration of stimulation by the atomization spray irrigation is sufficient to maintain the surface of the cultivation substrate at a humidity of more than or equal to 80% for 5 min or more.

In some embodiments, micro-mist humidification is applied to stimulate the fruiting of the *S. rugosoannulata;* an air humidity at a mist outlet for the micro-mist humidification is higher than or equal to 60%; and to stimulate the fruiting of the *S. rugosoannulata,* a duration of the micro-mist humidification is sufficient to maintain a humidity of more than or equal to 70% at 1 cm below the surface of the cultivation substrate for 5 min or more through mist deposition.

In some embodiments, during the cultivation, an air humidity is less than 75%.

In some embodiments, when the *S. rugosoannulata* is cultivated in a greenhouse and a maximum temperature across a planting region exceeds 30°C, one or more of the following measures 1) to 5) is additionally taken:
1) thickening a top layer of the greenhouse;
2) providing a water spray device at a top of the greenhouse;
3) providing a ventilation assembly and/or a cooling pad inside the greenhouse;
4) adopting a multi-tiered greenhouse, and providing a water spray device between greenhouse isolation layers; and
5) erecting a sunshade net at the top of the greenhouse with a gap.

### Beneficial effects:

The present disclosure provides a method for moisture control during cultivation of *S*. *rugosoannulata.* The cultivation includes in-ground cultivation, shelf-based cultivation, or pot-based cultivation. When the cultivation is the in-ground cultivation, the method includes the following steps: ridging, and arranging a walkway between adjacent ridges; laying a cultivation substrate on each of the ridge; and setting a bottom surface of the cultivation substrate to be 0.3 cm or more higher than the lowest point of the walkway. When the cultivation is the shelf-based cultivation or the pot-based cultivation, the method includes the following steps: laying the cultivation substrate on a shelf or in a pot; and forming holes at a bottom of the shelf or the pot, where a number and a size of the holes are designed such that a duration of water dripping from the holes after single watering is less than or equal to 3 h. The cultivation further includes stimulating fruiting of the *S. rugosoannulata.* In the present disclosure, when the cultivation is the in-ground cultivation, setting a bottom surface of the cultivation substrate to be 0.3 cm or more higher than the lowest point of the walkway facilitates the drainage of accumulated water at the bottom of the cultivation substrate. When the cultivation is the shelf-based cultivation, a number and a size of holes at a bottom of a shelf are designed such that a duration of water dripping from the holes after single watering is less than or equal to 3 h, which may effectively prevent the water accumulation in the cultivation substrate. The cultivation described in the present disclosure also includes stimulating fruiting of *S. rugosoannulata* to enable the full utilization of nutrients in the cultivation substrate, thereby extending the fruiting cycle and increasing the yield.

### BRIEF DESCRIPTION OF THE DRAWINGS

To explain the technical solutions in the embodiments of the present disclosure or in the prior art clearly, the accompanying drawings required in the examples will be briefly described below.
FIG. 1 shows a fruiting effect in Example 1;
FIG. 2 shows a fruiting effect in Comparative Example 1;
FIG. 3 shows a fruiting effect in Comparative Example 2;
FIG. 4 shows a fruiting effect in Example 2;
FIG. 5 shows a fruiting effect in Example 3;
FIG. 6 shows a fruiting effect in Example 4;
FIG. 7 shows a fruiting effect in Comparative Example 3;
FIG. 8 shows a fruiting effect in Example 5; and
FIG. 9 shows a fruiting effect in Comparative Example 4.

### DETAILED DESCRIPTION OF THE EMBODIMENTS

The present disclosure provides a method for moisture control during cultivation of *S*. *rugosoannulata.* The cultivation includes in-ground cultivation, shelf-based cultivation, or pot-based cultivation.

When the cultivation is the in-ground cultivation, the method includes the following steps:
ridging, and arranging a walkway between adjacent ridges;
laying a cultivation substrate on each of the ridge; and
setting a bottom surface of the cultivation substrate to be 0.3 cm or more higher than the lowest point of the walkway;
when the cultivation is the shelf-based cultivation or the pot-based cultivation, the method for moisture control includes the following steps:
   laying the cultivation substrate on a shelf or in a pot; and
   forming holes at a bottom of the shelf or the pot, where a number and a size of the holes are designed such that a duration of water dripping from the holes after single watering is less than or equal to 3 h; and
   the cultivation further includes stimulating fruiting of the *S. rugosoannulata.*

In the present disclosure, the cultivation includes in-ground cultivation, shelf-based cultivation, or pot-based cultivation.

In the present disclosure, when the cultivation is the in-ground cultivation, the method includes the following steps: ridging, and arranging a walkway between adjacent ridges; laying a cultivation substrate on each of the ridge; and setting a bottom surface of the cultivation substrate to be 0.3 cm or more higher than the lowest point of the walkway.

**.**

The present disclosure has no special restrictions on the width of each ridge and the spacing between ridges, and conventional settings in the art may be adopted.

In the present disclosure, the in-ground cultivation means that a cultivation substrate is in contact with the ground. The in-ground cultivation preferably includes field planting, greenhouse planting, or forest planting.

In the present disclosure, the cultivation substrate includes a cultivation medium and a water-retention layer sequentially from bottom to top. When the cultivation is the in-ground cultivation, the cultivation medium has a height of preferably 5 cm to 40 cm and more preferably 10 cm to 30 cm, and the water-retention layer has a height of preferably 0.5 cm to 10 cm, more preferably 1 cm to 7 cm, and most preferably 2 cm to 5 cm. The water-retention layer preferably includes a soil and/or a refined rice straw. The refined rice straw is preferably rice straw segments or rice straw granules. The rice straw segment has a length of preferably less than or equal to 25 cm, and the rice straw granule has a particle size of preferably less than or equal to 10 cm. The refined rice straw can prevent the compression on mushrooms, thereby avoiding the deformation of mushrooms.

In the present disclosure, when a soil used for the in-ground cultivation is not a sandy soil, preferably, a soil layer is additionally laid beneath the cultivation substrate. The soil layer can be formed through soil mounding or deep trench digging. In the present disclosure, the soil layer is added to make the bottom surface of the cultivation substrate 1 cm or more higher than the lowest point of the walkway. In the present disclosure, an upper surface of the soil layer is flat or convex. When the upper surface of the soil layer is convex, the center of the soil layer is 1 cm to 2 cm higher than an edge of the soil layer. In the present disclosure, when the soil used for the in-ground cultivation is a sandy soil, a ridge may be composed solely of the cultivation substrate without the soil layer. This is because the sandy soil facilitates the effective drainage.

In an embodiment of the present disclosure, a process for determining whether the soil layer needs to be arranged is as follows: Water is irrigated to the walkway until the water flow is visible in the walkway. If the humidity at 1 cm below the surface of the walkway remains less than 75% within 3 h, it indicates a low groundwater level and the presence of a sandy soil in the ground, and in this case, there is no need to arrange the soil layer. Otherwise, the soil layer needs to be arranged.

In the present disclosure, when irrigation is conducted at a conventional flow rate until the water flow is visible in the walkway, and if the walkway remains muddy within 3 h, the bottom surface of the cultivation substrate is 2 cm or more and preferably 3 cm or more higher than the lowest point of the walkway, which can accelerate the drainage of accumulated water at the bottom of the cultivation substrate.

In the present disclosure, a method for determining whether the walkway is muddy is preferably as follows: after irrigation is conducted at a conventional flow rate, and if the average humidity at 1 cm below the surface of the walkway exceeds 75%, the walkway is determined to be muddy, indicating excessive moisture in the walkway. The average humidity is preferably measured by a humidity probe.

In the present disclosure, during the cultivation of *S. rugosoannulata,* preferably, one or more of the following measures 1) to 4) is additionally taken: 1) enhancing ventilation; 2) strengthening sterilization in walkways; 3) spreading quicklime; 4) digging walkways deeply to increase height differences and facilitate the drainage of water in walkways.

In the present disclosure, when the cultivation is the shelf-based cultivation or the pot-based cultivation, the method includes the following steps: laying the cultivation substrate on a shelf or in a pot; and forming holes at a bottom of the shelf or the pot, where the number and size of the holes are designed such that a duration of water dripping from the holes after single watering is less than or equal to 3 h.

The present disclosure has no special restrictions on a structure of the shelf. A steel bar is provided for supporting, and a porous material is laid on the steel bar. The porous material preferably includes a sunshade net or a rigid perforated material.

In the present disclosure, the number and the size of the holes are designed such that a duration of continuous water dripping from the holes after single watering is preferably less than or equal to 2 h and more preferably less than or equal to 1 h.

In the present disclosure, the size of the holes is preferably 0.5 cm to 5 cm and more preferably 1 cm to 3 cm.

In the present disclosure, preferably, the shelf is not provided with an enclosure or is provided with an enclosure having a perforated bottom or is provided with an enclosure allowing dynamically-adjustable drainage to accelerate water drainage.

In the present disclosure, the number of holes at the bottom of the shelf is preferably increased to accelerate water drainage.

In the present disclosure, preferably, a water-retention layer is also arranged on the cultivation substrate. Parameters of the water-retention layer are the same as those in the above solution and will not be repeated here.

In the present disclosure, the cultivation substrate is laid on each tier of the multi-tier shelf for the shelf-based cultivation. In the present disclosure, the vertical distance between the bottom of the upper tier and the surface of the water-retention layer at the adjacent lower tier is preferably 30 cm to 90 cm.

In the present disclosure, when the cultivation is the shelf-based cultivation or the pot-based cultivation, the cultivation substrate has a height of preferably 5 cm to 40 cm and more preferably 10 cm to 30 cm, and the water-retention layer has a height of preferably 0.5 cm to 10 cm and more preferably 1 cm to 7 cm. Preferably, a soil layer is additionally provided underneath the cultivation substrate. The soil layer has a thickness of preferably 2 cm to 5 cm. A function of the soil layer is to extend a retention time of a relative humidity in the cultivation substrate.

In the present disclosure, a process for determining whether there is water accumulation during the shelf-based cultivation or the pot-based cultivation is preferably as follows: Whether there is water dripping from the holes is visually observed. Alternatively, if it is detected that a humidity at the bottom surface of the cultivation substrate remains at higher than 95% consecutively for 2 d or more, it is determined that there is water accumulation. Otherwise, it is determined that there is no water accumulation.

In the present disclosure, the cultivation further includes stimulating fruiting of the *S*. *rugosoannulata.*

In the present disclosure, the stimulating fruiting of the *S. rugosoannulata* preferably includes applying atomization spray irrigation. In the present disclosure, a spray irrigation system adopted for the atomization spray irrigation includes an atomizing nozzle. The distance between the atomizing nozzle and the surface of the cultivation substrate is preferably more than or equal to 5 cm. The water outlet pressure of the atomizing nozzle is preferably more than or equal to 0.06 MPa. In the present disclosure, the atomization spray irrigation can ensure that the surface layer of the cultivation substrate is subjected to uniform water gravity stimulation, resulting in even mushroom distribution. As a result, nutrients in the cultivation substrate can be fully utilized, and there is a long fruiting cycle and a high yield. The spray irrigation system adopted for the atomization spray irrigation should guarantee the full-coverage spraying. In the present disclosure, based on a coverage area of each atomizing nozzle of the spray irrigation system, atomizing nozzles are arranged at a specified interval to allow the coverage of marginal areas and the overlapping coverage. In the present disclosure, atomizing nozzles can be distributed in a fixed and spaced manner in greenhouses to achieve the uniform full-coverage spraying, and mobile atomized spraying can be adopted in fields and forest lands to enable the even moisture distribution in a surface layer of a cultivation substrate. In greenhouses, fields, and forested lands, a peripheral embankment can also be employed. Irrigation is conducted until a water level is higher than a cultivation substrate and a surface of the cultivation substrate is submerged. The embankment is then opened to allow rapid drainage within 30 min, thereby achieving the uniform moisture distribution. In the present disclosure, continuous atomization spray irrigation leads to a better fruiting effect than broad irrigation because the water gravity can disrupt mycelia to make the surface mycelia impaired and facilitate the production of fruiting bodies. In the present disclosure, when the atomization spray irrigation is applied to stimulate the fruiting of *S. rugosoannulata,* a duration of the stimulation by the atomization spray irrigation is preferably sufficient to maintain the surface of the cultivation substrate at a humidity of more than or equal to 80% for 5 min or more, such that the surface layer can undergo a thorough water gravity stimulation. The atomization spray irrigation may be applied continuously or intermittently. When applied intermittently, the atomization spray irrigation is preferably completed within 12 h.

In the present disclosure, the stimulating fruiting of the *S. rugosoannulata* preferably includes applying micro-mist humidification. The micro-mist humidification is preferably micron-scale micro-mist humidification. In the micro-mist humidification, water in the humidifier is ejected from the water surface through the high-frequency vibration of the atomizing plate to produce a fine water mist, thereby achieving the purpose of air humidification. The air humidity at the mist outlet for the micro-mist humidification is preferably higher than or equal to 60% and more preferably higher than or equal to 65%. When the fruiting of *S*. *rugosoannulata* is stimulated by the micro-mist humidification, a duration of the micro-mist humidification is preferably sufficient to maintain a humidity of more than or equal to 70% at 1 cm below the surface of the cultivation substrate for 5 min or more through mist deposition. In the present disclosure, the micro-mist humidification is preferably applied for greenhouse or indoor shelf-based cultivation. When applied to indoor shelf-based cultivation, the micro-mist humidification does not require multi-tier mobile spray irrigation or the arrangement of a water pipe at each tier for spray irrigation. Additionally, once fruiting bodies have already emerged, the existing fruiting bodies will not be contaminated by mud due to the water gravity impact to the mud. Further, the micro-mist humidification offers the water-saving advantage. Filtered water can be adopted as a water source for the micro-mist humidification, which can create an impurity microbe-free growth environment for *S. rugosoannulata.* Thus, the micro-mist humidification is suitable for industrial-scale shelf-based cultivation.

In the present disclosure, when the micro-mist humidification is applied, it is preferable to conduct ventilation enhancement or oxygen supplementation at the fruiting stage to prevent rust disease and/or edema. The oxygen supplementation is preferably carried out with an oxygen generator.

In the present disclosure, before the micro-mist humidification is applied, loosening the surface layer of 0.5 cm to 1 cm of the cultivation substrate is preferred to disrupt the mycelial layer in the uppermost surface layer of the cultivation substrate, thereby enhancing the fruiting efficiency.

In the present disclosure, the cultivation preferably also includes irrigation. The irrigation preferably includes atomization spray irrigation or micro-mist humidification. Parameters for the atomization spray irrigation or the micro-mist humidification refer to the aforementioned solutions and will not be repeated here. Preferably, the irrigation needs to be conducted when the humidity of the upper surface of the cultivation substrate is lower than 35% and/or a humidity of a bottom layer of the cultivation substrate is lower than 65%. More preferably, the irrigation needs to be conducted when the humidity of the upper surface of the cultivation substrate is lower than 35% and/or the humidity of the bottom layer of the cultivation substrate is 45% to 65%. For the daily management of water quantity for the irrigation, preferably, a humidity at the center of the cultivation medium should reach 35% to 75% or the cultivation substrate should hold together without crumbling when squeezed and show no obvious water traces, and more preferably, the humidity at the center of the cultivation medium should reach 45% to 65%.

In the present disclosure, the air humidity during the cultivation is preferably lower than 75% to assist in controlling the growth morphology of *S. rugosoannulata.* When heavy irrigation is applied to stimulate fruiting or when there is continuous rainy weather or when the air humidity exceeds 90% consecutively for 2 h, it is preferable to enhance ventilation or dehumidify until the air humidity is lower than 75%.

In the present disclosure, the raw material for preparing the cultivation medium preferably includes one or more selected from the group consisting of a corn cob, a corn stalk, a rice husk, a wheat straw, a forage grass, *Cenchrus fungigraminus,* a cottonseed hull, a cow dung, a wheat bran, a rice bran, a sorghum husk, a sawdust, and a spent edible mushroom substrate. The weight proportion of the sawdust in the spent edible mushroom substrate is preferably higher than 10%, and the spent edible mushroom substrate has a high lignin residue. The cultivation medium preferably includes lignin to extend the fruiting cycle. Preferably, at least one raw material for the cultivation medium has a lignin content of higher than or equal to 10%. More preferably, the mass content of lignin in the cultivation medium is higher than or equal to 10%. In the present disclosure, the cultivation medium has a particle size of preferably less than 10 cm, which can prevent hyphae from breakage due to too-large gaps among cultivation medium particles, thereby facilitating the growth.

In the present disclosure, the cultivation medium is preferably prepared as follows:
Raw materials for the cultivation medium are mixed and composted to produce the cultivation medium.

In the present disclosure, the composting is intended to eliminate impurity microbes in the raw materials. The moisture content of the raw materials for the cultivation medium is preferably higher than or equal to 80%. Before the composting, the surface of the compost is preferably covered with a film for relative sealing to maintain the internal temperature of the cultivation medium at 50°C or higher for at least 2 d. The composting is preferably repeated 2 times to 3 times, and water replenishment and material turning are conducted after each composting. In the present disclosure, impurity microbes are eliminated through the composting to protect the growth of hyphae of *S. rugosoannulata* from impurity microbes. The cultivation medium produced after the composting is a sterilized medium, which facilitates the absorption and utilization by *S. rugosoannulata* and can shorten the time from inoculation to first fruiting.

After the cultivation medium is produced, the cultivation medium is preferably adjusted to a moisture content of 60%, then bagged, and sterilized. The sterilization is preferably high-temperature and high-pressure sterilization. The high-temperature and high-pressure sterilization is conducted preferably at 105°C or higher. The high-temperature and high-pressure sterilization is conducted preferably for more than 1 h.

In the present disclosure, when *S. rugosoannulata* is cultivated in a greenhouse, the cultivation duration is determined based on temperature control of a facility. If a temperature in the greenhouse can be controlled at 30°C or lower in summer, there are no specific restrictions on the cultivation duration. If the greenhouse has a simple structure and the temperature in the greenhouse cannot be controlled in summer, the cultivation duration is preferably from August to October in the solar calendar, and is more preferably September. Alternatively, if the temperature in the greenhouse remains below 30°C consecutively for 3 d to 5 d toward the end of summer heat, the temperature in the greenhouse is preferably controlled at 30°C or lower and more preferably 28°C or lower. When *S. rugosoannulata* is cultivated, the humidity of the cultivation substrate should preferably be less than 80%.

In the present disclosure, settings for the greenhouse are determined based on local climatic conditions. If the local annual maximum temperature remains 30°C or lower or if *S*. *rugosoannulata* is cultivated only at 30°C or lower, a single-layer greenhouse is selected. If the local maximum temperature exceeds 30°C, a greenhouse with a thickened top layer is adopted to prevent a relative high temperature generated from solar exposure, so as to control the maximum temperature in the greenhouse at 30°C or lower.

When *S. rugosoannulata* is cultivated in a greenhouse and the maximum temperature across the planting region exceeds 30°C, it is preferable to further take one or more of the following measures 1) to 5) additionally:
1) Thickening a top layer of the greenhouse;
2) Providing water spray device at a top of the greenhouse to facilitate heat dissipation at the top of the greenhouse;
3) Providing a ventilation assembly and/or a cooling pad inside the greenhouse to effectively control the temperature.
4) Adaopting a multi-tiered greenhouse, and providing a water spray device between greenhouse isolation layers to achieve a cooling effect, where the arrangement of the isolation layers can reduce the influence of an air humidity on fruiting during water spraying; and
5) Erecting a sunshade net at the top of the greenhouse with a gap to avoid the direct sunlight exposure to the top of the greenhouse.

In the present disclosure, an air humidity on a surface of the water-retention layer during the cultivation is preferably lower than 75% to prevent the appearance of rice grain-sized red impurity microbes in the water-retention layer. When the rice grain-sized red impurity microbes appear, it is preferable to further take one or more of the following measures 1) to 3): 1) The rice grain-sized red impurity microbes are removed. 2) A new soil or a material for the water-retention layer is replenished. 3) A quicklime aqueous solution with a mass concentration of 5% is applied for thorough surface drenching and eradication.

In the present disclosure, preferably, *S. rugosoannulata* is cultivated with a residual ground space from another crop or is rotationally cultivated during the fallow period. The another crop preferably includes a grain crop, a vegetable crop, or a fruit tree crop. The fruit tree crop preferably includes a grapevine or an apple tree. The rotational cultivation during the fallow period means that, during a local high-temperature period, a locally-suitable grain or vegetable crop is cultivated and *S. rugosoannulata* is then cultivated after the harvest or when the temperature is suitable for the growth of *S. rugosoannulata.* When *S. rugosoannulata* is cultivated with a residual ground space from another crop or is rotationally cultivated during the fallow period, the cultivation mode for *S. rugosoannulata* is the same as the cultivation mode in the above technical solution. During the cultivation, preferably, a shading device is erected over the planting region of *S. rugosoannulata,* or the shading device is erected over the planting region of *S. rugosoannulata* and a rice straw is additionally laid on the surface of the cultivation substrate for *S. rugosoannulata.* The erecting of the shading device over the planting region of *S. rugosoannulata* can prevent the influence of additional devices on the original growth environment for other crops cultivated simultaneously. When the rice straw is laid on the surface of the cultivation substrate alone, moisture may be rapidly evaporated from ridges on which *S*. *rugosoannulata* grows and upper parts of mushrooms under intense sunlight after fruiting, resulting in deformed mushrooms. The erecting of the shading device over the planting region of *S. rugosoannulata* in combination can slow down the evaporation of moisture from ridges on which *S. rugosoannulata* grows and upper parts of mushrooms, thereby ensuring plump mushrooms.

The technical solutions of the present disclosure will be clearly and completely described below with reference to the examples of the present disclosure.

### Example 1: In-ground cultivation

The cultivation medium included the following components in mass percentages: 60% of corn cob, 15% of rice husk, and 25% of spent *Lentinula edodes* substrate with a high lignin residue. The weight proportion of the sawdust in the spent *Lentinula edodes* substrate was higher than 10%.

The preparation process of the cultivation medium was as follows. The three materials were stacked, and thoroughly stirred under watering. A resulting mixture was covered with a film, and subjected to fermentation. After the internal temperature of the mixture reached 50°C or more and maintained for 2 d, the mixture was further stirred and watered, and fermentated for 5 d or more to produce the cultivation medium.

Cultivation location: The cultivation medium produced was transported to a greenhouse.

Cultivation was conducted in September in the solar calendar, or when the temperature in the greenhouse remained below 30°C consecutively for 3 d to 5 d toward the end of summer heat.

Specific cultivation mode: The cultivation substrate was piled in columns or rows. Before the cultivation substrate was piled, with pits dug or not dug. When the pits were dug, the excavated soil was placed in walkways. The cultivation medium was piled in the designated columns or rows, with a height of 10 cm to 30 cm.

After being piled and formed, the cultivation medium was watered, such that a resulting cultivation substrate demonstrated a basically-consistent humidity with that of the soil in the walkway. The surface temperature and humidity of the cultivation substrate were tested. When the surface temperature was below 28°C and the surface humidity was lower than 80%, the fungal spawn was inoculated.

Spaced sowing was conducted in blocks or points. After the sowing, the fungal spawn was covered with soil immediately. When the local air humidity was consistently lower than 50% or the covered soil was a sandy soil, an appropriate amount of rice straw was additionally spread to protect hyphae from long-term exposure to the air.

The soil piled in walkways was spread on the surface of the cultivation medium, with a covering thickness of 1 cm to 5 cm.

When the soil was a sandy soil, the bottom surface of the cultivation substrate was 0.3 cm or more higher than the lowest point of a walkway. When the soil was not a sandy soil, the bottom surface of the cultivation substrate was 1 cm or more higher than the lowest point of the walkway. On the first few days after sowing, the air humidity was closely monitored. When the air humidity was continuously higher than 80% on rainy days or the humidity in the upper layer of the cultivation medium was higher than or equal to 75%, ventilation enhancing or dehumidification was conducted.

During the cultivation process, atomization spray irrigation was applied. When the humidity at the center of the cultivation medium was lower than 65%, supplemental water spray irrigation was applied appropriately. The duration of the supplemental water spray irrigation was adjusted gradually from short to long. After the supplemental water spray irrigation, the humidity at the center of the cultivation medium was maintained at approximately 65% for about 1 d.

When some hyphae grew on the surface of the ridge on day 40 approximately, heavy irrigation was started to stimulate fruiting. The duration of single continuous watering was controlled at approximately 30 min. When mushrooms grew by about 3 cm within 6 h after watering, correspondingly, ventilation was enhanced, and the duration of single continuous watering was adjusted to 5 min to 20 min.

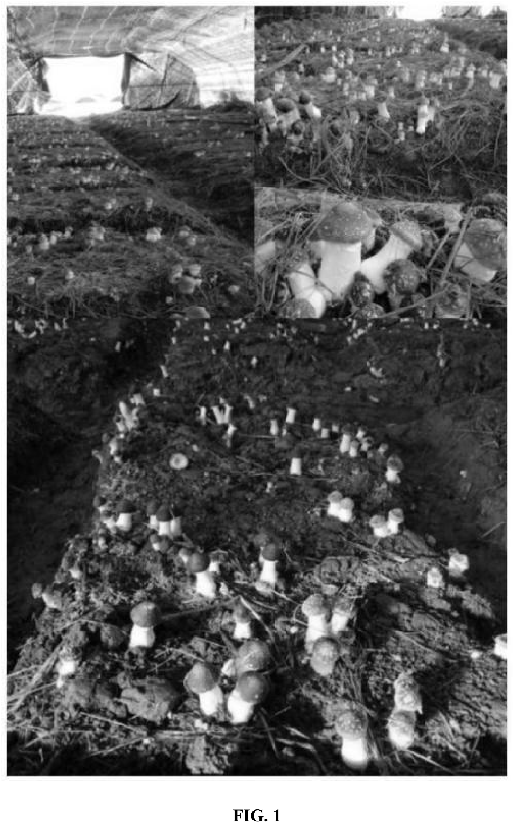

The fruiting effect is shown in FIG. 1.

Yield: Fruiting began approximately on day 40 after the sowing. As the mass of lignin in the spent *Lentinula edodes* substrate was 10% or more of the total mass of the cultivation medium, continuous production was sustained for 6 months or more, and the yield per mu (667 m²) was 5,000 jin (1 jin = 0.5 kg) or more.

### Comparative Example 1

The cultivation medium included the following components in mass percentages: 70% of corn cob and 30% of rice husk.

The preparation process of the cultivation medium was as follows: The two materials were stacked, and thoroughly stirred under watering. A resulting mixture was covered with a film, and fermented. When the internal temperature of the mixture remained at 50°C or more for 2 d, the mixture was further stirred and watered, and fermented for 5 d or more to produce the cultivation medium.

### Cultivation location: Forest.

Cultivation time: Inoculation was carried out in October in the solar calendar or when the air temperature in the forest remained below 30°C consecutively for about 3 d to 5 d toward the end of summer heat.

Specific cultivation mode: The soil between two rows of trees was crushed, and a 3 to 5-hole spray irrigation system was laid to moisten the soil. After the relative humidity of the soil decreased, the soil was excavated and piled at two sides, and the cultivation medium was piled for ridging. The height of the cultivation medium was 10 cm to 30 cm. The *S. rugosoannulata* spawn was sown by the conventional method, and then the surface of the cultivation medium was covered with the soil piled at two sides.

The moisture content of a soil surface was monitored by the following common method: It was observed whether the surface soil was whitish. When the soil was loosened when held in hands, supplemental watering was required.

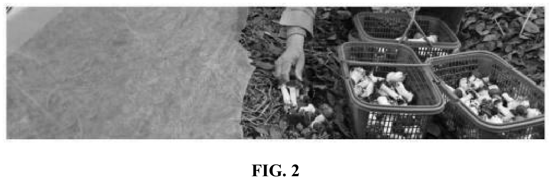

The fruiting effect is shown in FIG. 2. As shown in FIG. 2, mushrooms grow on edges of each ridge, and hardly grow in the middle of each ridge. This is attributed to the uneven water spraying of the 3 to 5-hole spray irrigation system. The clustered mushroom growth on ridge edges hinders the harvesting. When nutrients of ridge edges are depleted, the fruiting on the ridge edges decreases, and hyphae in middle regions miss the optimal growth period, which ultimately reduces the overall yield.

This comparative example demonstrates inferior fruiting outcomes to Example 1 due to the following factors: 1. Environmental influence: In some densely forested areas, there is a low ground temperature in winter. In some areas, the ground temperature is even 5°C to 6°C lower than the air temperature. Such a low ground temperature slows down the mycelial growth. 2. Uneven water spray irrigation: Although the fruiting period remains about 5 months, the yield decreases by approximately 1/5. 3. On rainy days, the air humidity in the forest is excessively high and uncontrollable, resulting in the overgrowth of mushrooms to adversely affect the quality.

### Comparative Example 2

Raw material for the cultivation medium: Rice straw.

The preparation process of the cultivation medium was as follows: The rice straw was allowed to fully absorb water, and then covered with a film for fermentation. When the central temperature in a resulting compost remained naturally at 50°C or higher for 2 d or more, the compost was turned, water was replenished to allow full water absorption, and fermentation was conducted. The fermentation was repeated 2 to 3 times in this way to produce the cultivation medium.

Cultivation location: Field.

The irrigation was field embankment immersion-based irrigation. The ridging, inoculation, and management were the same as those in Example 1.

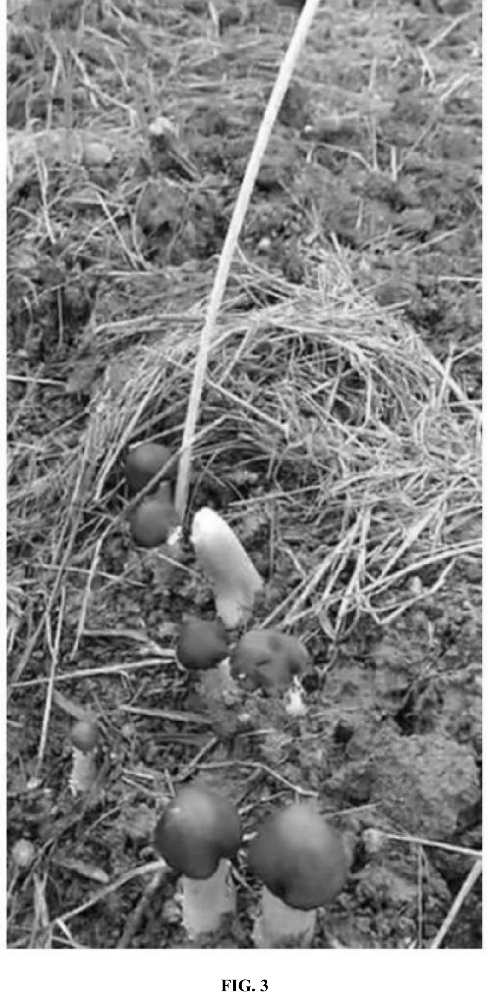

The fruiting effect is shown in FIG. 3.

Due to insufficient nutrients in the cultivation medium and drawbacks of the field embankment immersion-based irrigation, hyphae on the surface of the cultivation substrate cannot be stimulated, which hinders the fruiting in the middle of each ridge. As a result, mushrooms grow only on edges of ridges, and do no grow in middle regions. The continuous fruiting period is less than 4 months. Compared to Example 1, this comparative example has a yield reduced by 1/5 or more.

### Example 2: Shelf-based cultivation

The cultivation medium included the following components in mass percentages: 60% of corn cob, 15% of rice husk, and 25% of spent *Lentinula edodes* substrate.

Preparation processes for the cultivation medium were as follows: 1. The three materials were stacked, and thoroughly stirred under watering. The resulting mixture was covered with a film for fermentation. When the internal temperature of the mixture remained at 50°C or more for 2 d, the mixture was further stirred, watered, and fermented for 5 d or more to produce the cultivation medium. 2. The raw materials for the cultivation medium were mixed and stirred, and then added to a tank. Water was added to the tank, and fermentation was conducted for 5 d or more to produce the cultivation medium. 3. The raw materials for the cultivation medium were mixed and stirred, adjusted to the humidity of about 65%, bagged, and then subjected to the high-temperature and high-pressure sterilization described above to produce the cultivation medium.

Cultivation location: The cultivation medium produced was laid on shelves.

Cultivation was conducted in September in the solar calendar, or when the temperature in the greenhouse remained below 30°C consecutively for 3 d to 5 d approximately toward the end of summer heat, or when the indoor temperature was controlled at 30°C or lower.

Specific cultivation mode: The drainage system was arranged for the shelves. The shelves were not provided with enclosures.

The cultivation medium was piled on the shelves with a height of 1 cm to 30 cm. The specified amount of soil was first spread beneath the cultivation medium to relatively extend the moisture retention time. The surface temperature and humidity of the cultivation substrate were tested. When the surface temperature was below 28°C and the surface humidity was lower than 80%, the fungal spawn was inoculated.

Spaced sowing was conducted in blocks or points. After the sowing, the fungal spawn was covered with soil immediately. When the local air humidity was consistently lower than 50% or the covered soil was sandy soil, an appropriate amount of rice straw was additionally spread. The covered soil was pre-adjusted to a humidity of 80% or more, and the covering thickness of the soil was typically 1 cm to 5 cm. As a result, hyphae were protected from long-term exposure to the air.

The cultivation substrate formation for the shelves could also be achieved with an automated device. Cultivation substrate formation plans were as follows:

Cultivation substrate formation plan 1 based on an automated device: The soil, cultivation medium, fungal spawn, and water-retention material were placed in respective pots. Outlets of the multi-layer pot were consistent with the ridge width and were aligned with the material bed. The structure of the material bed included a plurality of flat-laid rollers wrapped in the water-permeable material. When the material bed rolled, the corresponding materials were simultaneously extruded through the outlets of the multi-layer pot respectively and piled on the material bed to achieve the purpose of automatic cultivation substrate formation.

Cultivation substrate formation plan 2 based on an automated device: The soil and the cultivation medium were laid by pumping devices, then sowing was conducted, and then a water-retention layer was applied.

On the first few days after sowing, the air humidity was closely monitored. When the air humidity was continuously higher than 80% on rainy days or the humidity in the upper layer of the cultivation medium was higher than or equal to 75%, ventilation enhancing or dehumidification was conducted.

During the cultivation process, atomization spray irrigation was applied. When the humidity at the center of the cultivation medium was lower than 65%, supplemental water spray irrigation was applied appropriately. The duration of the supplemental water spray irrigation was adjusted gradually from short to long. After the supplemental water spray irrigation, the humidity at the center of the cultivation medium was maintained at approximately 65% for about 1 d.

During the spray irrigation process, when it was observed that the duration of water dripping from holes after single watering was longer than 3 h, the number of holes in the bottom was increased emergently to accelerate the water drainage. Before the next cultivation cycle, a preferable drainage material was selected or the water drainage method was improved.

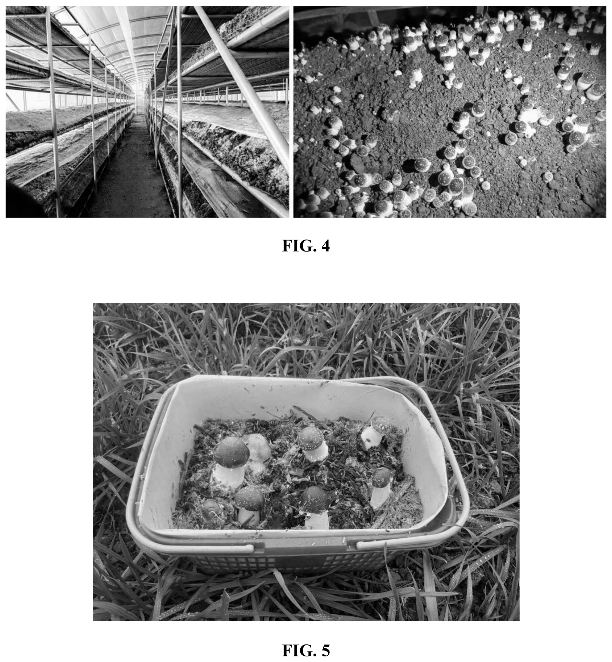

When some hyphae grew on the surface of the ridge on day 40 approximately, heavy watering was started to stimulate fruiting. The duration of single continuous watering was controlled at approximately 30 min. When mushrooms grew by about 3 cm within 6 h after watering, correspondingly, ventilation was enhanced, and the duration of single continuous watering was adjusted to 5 min to 20 min. The fruiting effect is shown in FIG. 4.

### Example 3: Pot-based cultivation

The device loading the cultivation substrate was a pot, and the sidewall of the pot enabled dynamic drainage. The remaining process was the same as that in Example 2, and the drainage device was also the same as that in Example 2.

The fruiting effect is shown in FIG. 5.

### Example 4: Multi-tiered greenhouse-based cultivation

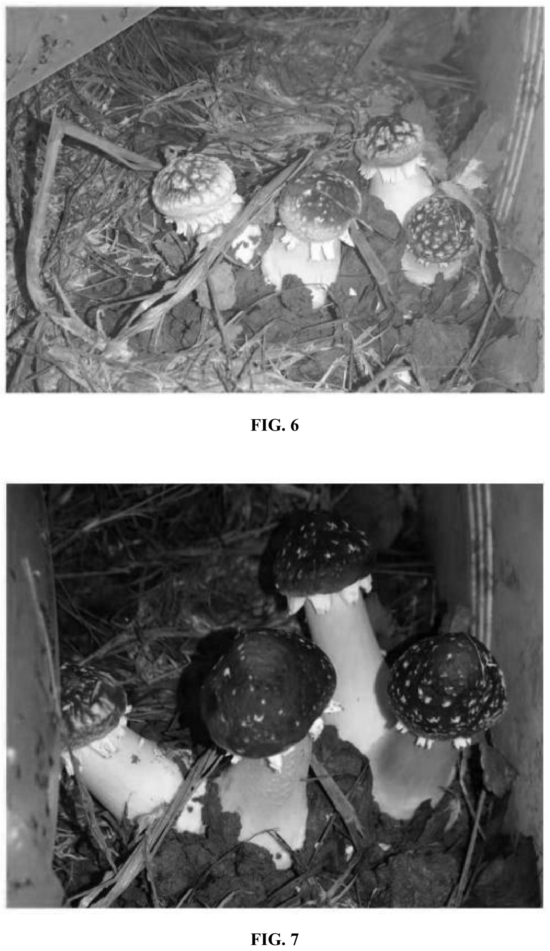

*S. rugosoannulata* was cultivated in a multi-tiered greenhouse. In the multi-tiered greenhouse, the water spray device was arranged between isolation layers. This design was intended to prevent moisture from bypassing air vents of the inner greenhouse and entering the inner greenhouse, which would cause the air humidity in the inner greenhouse to exceed 75% and thus would adversely affect the mycelial growth. When such an impact occurred, the dehumidification device and the oxygen supplementation device were added between the isolation layer and the fungal bed to maintain the air humidity at 75% or lower. The remaining process was the same as that in Example 1. The fruiting effect is shown in FIG. 6.

### Comparative Example 3

*S. rugosoannulata* was cultivated in a multi-tiered greenhouse without isolation layers arranged. During water spraying-based cooling, the air humidity above the fungal bed would exceed 75% due to moisture, which was highly likely to cause mycelial mold. The remaining process was the same as that in Example 1. The fruiting effect is shown in FIG. 7.

As shown in FIG. 6 and FIG. 7, compared with Example 4, Comparative Example 3 leads to *S. rugosoannulata* that has an elongated fruiting body and unattractive appearance and is internally hollow due to excessively-rapid growth, resulting in poor quality.

### Example 5: Intercropping of a grapevine and S. rugosoannulata

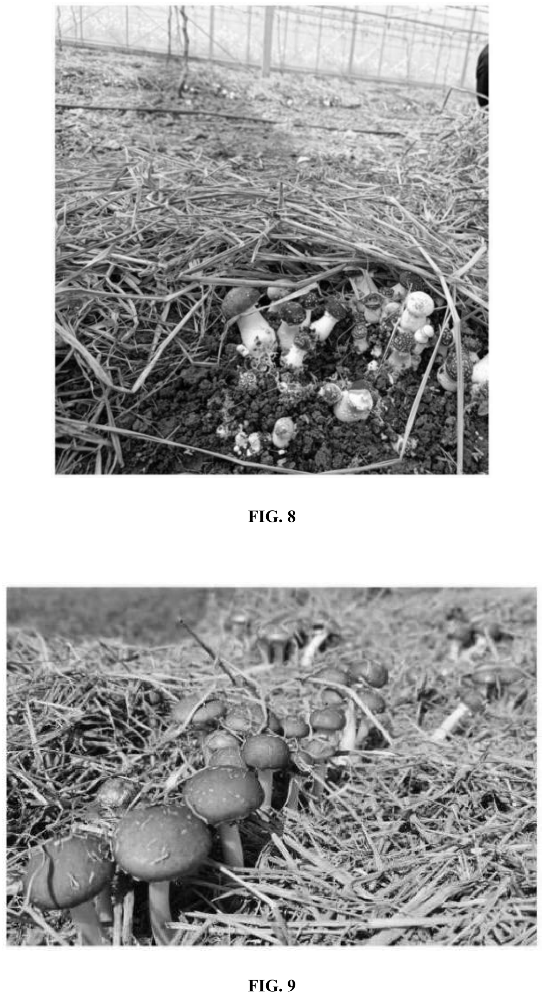

The *S. rugosoannulata* was intercropped with the grapevine. The rice straw was laid on the surface of the cultivation substrate for *S*. *rugosoannulata* in the planting region of *S*. *rugosoannulata.* Alternatively, the shading device was erected over the planting region of *S*. *rugosoannulata* and the rice straw was additionally laid on the surface of the cultivation substrate for *S. rugosoannulata.* The remaining process was the same as that in Example 1. The fruiting effect is shown in FIG. 8. As shown in FIG. 8, under the protection of the rice straw, fruit bodies of *S. rugosoannulata* remain plump even when they were small.

### Comparative Example 4

*S. rugosoannulata* was intercropped with rice. The remaining process was the same as that in Example 1. The planting site was a field. Only the rice straw was laid on the cultivation substrate for protection. The fruiting effect is shown in FIG. 9. As shown in FIG. 9, when growing up, fruiting bodies protrude beyond the rice straw protective layer, and thus are deformed.

Although the present disclosure has been described in detail through the above examples, these examples are merely some rather than all of the examples of the present disclosure. Other examples can be acquired based on these examples without creative efforts or technical solutions in various examples may be appropriately combined to produce other examples understandable by those skilled in the art, and such examples shall fall within the protection scope of the present disclosure.

## Claims

1. A method for moisture control during cultivation of *Stropharia rugosoannulata (S. rugosoannulata),* wherein the cultivation comprises in-ground cultivation, shelf-based cultivation, or pot-based cultivation;
when the cultivation is the in-ground cultivation, the method comprises the following steps:
ridging, and arranging a walkway between adjacent ridges;
laying a cultivation substrate on each of the ridges; and
setting a bottom surface of the cultivation substrate to be 1 cm or more higher than the lowest point of the walkway;
when the cultivation is the shelf-based cultivation or the pot-based cultivation, the method comprises the following steps:
laying the cultivation substrate on a shelf or in a pot; and
forming holes at a bottom of the shelf or the pot, wherein a number and a size of the holes are designed such that a duration of water dripping from the holes after single watering is less than or equal to 3 h;
during the cultivation, an air humidity is less than 75%;
the cultivation further comprises stimulating fruiting of the *S. rugosoannulata;* the stimulating fruiting of the *S*. *rugosoannulata* comprises applying atomization spray irrigation or micro-mist humidification;
when the atomization spray irrigation is applied, a spray irrigation system adopted accordingly comprises an atomizing nozzle; a distance between the atomizing nozzle and a surface of the cultivation substrate is more than or equal to 5 cm; a water outlet pressure of the atomizing nozzle is more than or equal to 0.06 MPa; and a duration of stimulation by the atomization spray irrigation is sufficient to maintain the surface of the cultivation substrate at a humidity of more than or equal to 80% for 5 min or more; and
when the micro-mist humidification is applied, an air humidity at a mist outlet for the micro-mist humidification is higher than or equal to 60%; and to stimulate the fruiting of the *S*. *rugosoannulata,* a duration of the micro-mist humidification is sufficient to maintain a humidity of more than or equal to 70% at 1 cm below the surface of the cultivation substrate for 5 min or more through mist deposition.

2. The method according to claim 1, wherein the number and the size of the holes are designed such that a duration of continuous water dripping from the holes after single watering is less than or equal to 2 h.

3. The method according to claim 1, wherein the cultivation substrate comprises a cultivation medium and a water-retention layer sequentially from bottom to top; and when a soil used for the in-ground cultivation is not a sandy soil, a soil layer is additionally laid beneath the cultivation substrate.

4. The method according to claim 3, wherein the cultivation medium comprises lignin; and at least one raw material for the cultivation medium has a lignin content of higher than or equal to 10%.

5. The method according to claim 1, wherein the shelf is not provided with an enclosure or is provided with an enclosure having a perforated bottom or is provided with an enclosure allowing dynamically-adjustable drainage.

6. The method according to claim 1, wherein when the *S. rugosoannulata* is cultivated in a greenhouse and a maximum temperature across a planting region exceeds 30°C, one or more of the following measures 1) to 5) is additionally taken:
1) thickening a top layer of the greenhouse;
2) providing a water spray device at a top of the greenhouse;
3) providing a ventilation assembly and/or a cooling pad inside the greenhouse;
4) adopting a multi-tiered greenhouse, and providing a water spray device between greenhouse isolation layers; and
5) erecting a sunshade net at the top of the greenhouse with a gap.
